# EUROPEAN PATENT APPLICATION

(11) **EP 4 685 537 A1**
(43) Date of publication of application: **28.01.2026**
(21) Application number: 25188341.9
(22) Date of filing: 09.07.2025
(51) Int. Cl.: G02B 6/44

(54) **FLEXIBLE OPTICAL FIBER SPLICE TRAY ASSEMBLY**

(30) Priority: 22.07.2024 US 202418779350
(71) Applicant: Clearfield, Inc., Minneapolis, Minnesota 55428 (US)
(72) Inventor: HILL, John P, Minneapolis (US); HAMPLE, Donovan J, Minneapolis (US); COLUMBUS, Jesse A, Minneapolis (US)
(74) Representative: Haseltine Lake Kempner LLP

(57) **Abstract**

A flexible optical fiber splice tray assembly and method of manufacture. The method can include securing (1102) an optical fiber splice to a flexible substrate using one or more splice attachment features, wherein the optical fiber splice comprises a first end and a second end, wherein a first optical fiber is coupled to the first end of the optical fiber splice, and wherein a second optical fiber is coupled to a second end of the optical fiber splice. The method includes securing (1104) the second optical fiber to the flexible substrate using one or more of a plurality of fiber attachment features, wherein the plurality of fiber attachment features are configured to limit a bend radius R of the second fiber to result in a predetermined maximum bending loss. The method includes rolling-up and securing (1106) the flexible substrate in a cylinder shape by attaching together two opposite ends of the flexible substrate.

## Description

### FIELD

The disclosed technology generally relates to optical fiber distribution, and in particular, to an assembly with optical fibers routed and mounted on flexible substrate that can be rolled into a compact tubular package.

### BACKGROUND

The use of optical fiber as a communication medium for telecommunication and networking applications provides many advantageous for long distance communications because light propagates through the fiber with less attenuation than for electrical signals using metal wires. Furthermore, unlike electrical communication modes, light signals are immune to electromagnetic interference, thereby eliminating crosstalk between signals so that multiple optical fibers can bundled into a single cable or ribbon.

Optical fiber also permits higher data rate transmission compared with other forms of communications. For example, the per-channel light signals propagating in the fiber can be modulated at rates in the range of gigabits per second. An individual optical fiber can carry many independent channels, each using a different wavelength of light and wavelength-division multiplexing (WDM). Optical fiber saves space in cable ducts because a single optical fiber can carry much more data than a single electrical cable.

Individual optical fibers typically include a core, surrounded by cladding, surrounded by strength members and jacketing to provide physical and environmental protection. An optical fiber cable can be made up of many individual optical fibers. In ribbon cables, for example, multiple optical fibers may be joined side-by-side to form a flat cable.

Individual optical fibers can be fragile, and require measures to prevent fracturing, or breakage. Optical fiber can be subject to physical routes limited to a minimum bend radius, at the cable level and/or at an individual fiber level, to prevent fracturing, breakage, or signal distortions/losses. Long haul telecommunications fibers are typically kept relatively straight in large multi-fiber cables and are thus protected from bending losses of light due to exceeding the critical bend radius of the fiber design (typically in the range of 10 mm to 25 mm). In addition, optical fibers may be damaged if they are subjected to excessive tension or physical impact. Due to the risk of damage, it is preferable to avoid handling individual fibers any more than is necessary.

Optical fibers are increasingly being used to provide signal transmission between various service providers (e.g., telephone systems, video systems, computer networks, etc.) and individual users (e.g., homes, businesses). Optical fibers that support many propagation paths or transverse modes are called multi-mode fibers (MMFs), while those which can only support a single mode are called single-mode fibers (SMF). MMFs generally have a larger core diameter for short-distance communication links, and SMF is used for longer distance communication links. Working with optical fiber (e.g., splicing, splitting, patching) involves close tolerances, and is best accomplished in controlled environments where physical alignments, temperature, and cleanliness are better managed to facilitate precision work results.

Optical fiber connection apparatuses, such as outside plant distribution cabinets, distribution frames, patch panels, splice terminations are used wherever the interconnection or cross-connection of multiple optical fibers is required. For example, optical fiber cable may enter a distribution cabinet, fiber frame, or patch panel for connection/splicing to individual optical fibers that can be routed or split off to provide service to homes or businesses. Often, it is desirable that such optical fiber management, and/or optical fiber connection apparatus, allow for the interconnection of a large number of individual fibers in as small a space as possible (e.g., high density connections). However, the traditional use of optical fiber splice trays and/or splitters can take up a large space in a fiber frame because the input fiber is routed to one end of the splice tray or splitter, and the output fiber(s) is/are generally routed out of the other end of the splice tray or splitter, which can consume an inordinate amount of linear space and can require access to both ends of the splice tray/splitter assembly.

A need exists to make a compact and robust optical fiber splice tray/splitter package that can simplify installation and servicing of the optical fiber connection apparatuses and associated optical fibers.

### BRIEF SUMMARY

Some or all of the above needs may be addressed by certain implementations of the disclosed technology.

In an example implementation, a flexible substrate optical fiber splitter assembly is provided that includes an optical fiber bundle or ribbon comprising a plurality N of optical fibers, wherein a first optical fiber of the plurality N of optical fibers is separated from remaining N-1 optical fibers of the optical fiber bundle or ribbon; a 1xM splitter comprising M optical fibers, and an input coupled to the first optical fiber; and a flexible substrate. In accordance with certain exemplary implementations of the disclosed technology, a first length of the optical fiber bundle or ribbon comprising the plurality N of optical fibers is routed to a first portion of the flexible substrate; a second length of the remaining N-1 optical fibers is routed and attached to a second portion of the flexible substrate; a third length of the first optical fiber is routed to a third portion of the flexible substrate; the 1xM splitter is attached to a fourth portion of the flexible substrate; and each of the M optical fibers of the 1xM splitter are routed and attached to corresponding predetermined M portions of the flexible substrate. One or more of the N optical fibers, the first optical fiber, the N-1 optical fibers, and M optical fibers are routed to result in a predetermined maximum bending loss.

Certain implementations of the disclosed technology may include a flexible substrate optical fiber splitter assembly having an optical fiber bundle or ribbon comprising a plurality N of optical fibers, wherein a first optical fiber of the plurality N of optical fibers is separated from remaining N-1 optical fibers of the optical fiber cable; a 1xM splitter comprising M optical fiber outputs, and an input coupled to the first optical fiber; and a flexible substrate, wherein: a first length of the optical fiber bundle or ribbon comprising the plurality N of optical fibers is attached to a first portion of the flexible substrate; a second length of the remaining N-1 optical fibers is attached to a second portion of the flexible substrate; a third length of the first optical fiber is attached to a third portion of the flexible substrate; a fourth length of the M optical fiber outputs of the 1xM splitter is attached to a fourth portion of the flexible substrate; and the 1xM splitter is attached to a fifth portion of the flexible substrate and aligned with the fourth portion. The second length of the remaining N-1 optical fibers comprises a first U-turn having a bend radius R1; the third length of the first optical fiber comprises a second U-turn having bend radius R2; and the bend radius R1 and the bend radius R2 are selected to result in a predetermined maximum bending loss.

In another example implementation, a method is provided for assembling a flexible substrate optical fiber splitter. The method can include separating, from an optical fiber bundle or ribbon comprising a plurality N of optical fibers, a first optical fiber to result in a first branch comprising the first optical fiber and a second branch comprising remaining N-1 optical fibers of the optical fiber bundle or ribbon; splicing, to the first optical fiber, an input fiber of a 1xM splitter comprising M optical fibers as outputs; routing and/or attaching, to at least a portion of a flexible substrate, at least a portion of the remaining N-1 optical fibers, the 1xM splitter, and the M optical fibers such that each enter or exit from a first end of the flexible substrate, wherein:a first length of the optical fiber bundle or ribbon comprising the plurality N of optical fibers is routed to a first portion of the flexible substrate; a second length of the remaining N-1 optical fibers is routed and attached to a second portion of the flexible substrate; a third length of the first optical fiber is routed to a third portion of the flexible substrate; the 1xM splitter is attached to a fourth portion of the flexible substrate; and each of the M optical fibers of the 1xM splitter are routed and attached to corresponding predetermined M portions of the flexible substrate; wherein one or more of the N optical fibers, the first optical fiber, the N-1 optical fibers, and M optical fibers are routed to result in a predetermined maximum bending loss.

In another example implementation, a method is provided for assembling a flexible substrate optical fiber splitter. The method includes separating, from an optical fiber bundle or ribbon comprising a plurality N of optical fibers, and at a first point, a first optical fiber to result in a first branch comprising the first optical fiber and a second branch comprising remaining N-1 optical fibers of the optical fiber bundle or ribbon; splicing, to the first optical fiber, an input fiber of a 1xM splitter comprising M optical fiber outputs, wherein a splice is disposed a predetermined length beyond the first point; attaching, to a flexible substrate, the optical fiber bundle or ribbon, the first optical fiber, the remaining N-1 optical fibers, and the 1xM splitter to a flexible substrate such that each enter or exit from a first end of the flexible substrate. A first length of the optical fiber bundle or ribbon comprising the plurality N of optical fibers is attached to a first portion of the flexible substrate; a second length of the remaining N-1 optical fibers is attached to a second portion of the flexible substrate; a third length of the first optical fiber is attached to a third portion of the flexible substrate; a fourth length of the M optical fiber outputs of the 1xM splitter is attached to a fourth portion of the flexible substrate; and the 1xM splitter is attached to a fifth portion of the flexible substrate and aligned with the fourth portion. The second length of the remaining N-1 optical fibers comprises a first U-turn having a bend radius R1; the third length of the first optical fiber comprises a second U-turn having bend radius R2; and the bend radius R1 and the bend radius R2 are selected to result in a predetermined maximum bending loss.

In another example implementation, a method is provided for assembling a flexible substrate optical fiber splitter. The method includes separating, from an optical fiber bundle or ribbon comprising a plurality N of optical fibers, and at a first point, a first optical fiber to result in a first branch comprising the first optical fiber and a second branch comprising remaining N-1 optical fibers of the optical fiber bundle or ribbon; splicing, to the first optical fiber, an input fiber of a 1xM splitter comprising M optical fiber outputs, wherein a splice is disposed a predetermined length beyond the first point; attaching, to a flexible substrate, the optical fiber bundle or ribbon, the first optical fiber, the remaining N-1 optical fibers, and the 1xM splitter to a flexible substrate such that each enter or exit from a first end of the flexible substrate, wherein the remaining N-1 optical fibers comprises a first U-turn having a bend radius R1, wherein the first optical fiber comprises a second U-turn having bend radius R2, and wherein the bend radius R1 and the bend radius R2 are selected to result in a predetermined maximum bending loss. The method includes rolling the flexible substrate into a cylinder and installing the flexible substrate into a cylindrical housing.

In another example implementation, a flexible substrate optical fiber splice tray assembly is provided. The assembly includes a flexible substrate comprising a splice securing region having one or more splice attachment features for securing a splice to the flexible substrate, and a slack fiber securing region having a plurality of fiber attachment features for securing excess fiber to the flexible substrate, wherein the plurality of fiber attachment features are configured to limit a bend radius R of the excess fiber to result in a predetermined maximum bending loss. The flexible substrate is configured to be rolled-up and secured in a cylinder shape by attaching a first end of the flexible substrate to an opposing end of the flexible substrate.

In another example implementation, a method is provided assembling a flexible substrate optical fiber splice tray. The method includes securing an optical fiber splice to a flexible substrate using one or more splice attachment features, wherein the optical fiber splice comprises a first end and a second end, wherein a first optical fiber is coupled to the first end of the optical fiber splice, and wherein a second optical fiber is coupled to a second end of the optical fiber splice. The method includes securing the second optical fiber to the flexible substrate using one or more of a plurality of fiber attachment features, wherein the plurality of fiber attachment features are configured to limit a bend radius R of the second fiber to result in a predetermined maximum bending loss. The method includes rolling-up and securing the flexible substrate in a cylinder shape by attaching together two opposite ends of the flexible substrate.

Other implementations, features, and aspects of the disclosed technology are described in detail herein and are considered a part of the claimed disclosed technology. Other implementations, features, and aspects can be understood with reference to the following detailed description, accompanying drawings, and claims.

### BRIEF DESCRIPTION OF THE FIGURES

FIG. 1A depicts a perspective view of a flexible substrate optical fiber splitter assembly 102 in a flat configuration, for example, during manufacturing and having an input optical fiber bundle/ribbon cable with one of the input optical fibers separated from the bundle and fed to a splitter, with the remaining bundle and individual fiber routed in a U-shape and attached to the flexible substrate so that all fiber ends enter/exit one end of the assembly, in accordance with certain implementations of the disclosed technology.
FIG. 1B depicts a front-view of the assembly 102 shown in FIG. 1A illustrating how the bend radius of the optical fibers may be controlled by attachment to the flexible substrate, according to certain implementations of the disclosed technology.
FIG. 2A depicts a perspective view of the flexible substrate optical fiber splitter assembly 102 that may be configured in a tube shape, according to certain implementations of the disclosed technology.
FIG. 2B depicts a front-view of the flexible substrate optical fiber splitter assembly 102 as depicted in FIG. 2A, that may be configured in a tube shape, such that the optical fibers enter/exit one end of the assembly, according to certain implementations of the disclosed technology.
FIG. 3A depicts a front-view of the assembly 102, as shown in FIG. 1A, where the input and output optical fibers are connectorized, according to certain implementations of the disclosed technology.
FIG. 3B depicts a front-view of the assembly 102, as shown in FIG. 1A, where the input and output optical fibers are connectorized in a different configuration, according to certain implementations of the disclosed technology.
FIG. 4A is an exploded view illustration of an assembly package 420 in which a flexible substrate optical fiber splitter assembly 102 is configured for being enclosed in a housing 402, according to certain implementations of the disclosed technology.
FIG. 4B is another exploded view illustration of the assembly package 420 as shown in FIG. 4A, in which the optical fibers of flexible substrate optical fiber splitter assembly 102 are connectorized and attached to a multi-connector plug, according to certain implementations of the disclosed technology.
FIG. 4C is another exploded view illustration of the assembly package 420 as shown in FIG. 4A and FIG. 4B, in which the optical fibers of flexible substrate optical fiber splitter assembly 102 are connectorized and attached to a multi-connector plug, which may also be used to insert into the housing 402 to seal the flexible substrate optical fiber splitter assembly 102 within the housing 402, according to certain implementations of the disclosed technology.
FIG. 5A depicts a cut-away 3D representation of an example implementation of the assembly package 420 (as illustrated in FIGs. 4A-C).
FIG. 5B depicts a close-up view of the cut-away 3D representation (as shown in FIG. 5A) in which central tubes 502 of corresponding furcations 504, 506, 508 may be utilized to route fibers to connectors (not shown) for external connections.
FIG. 6A depicts an alternative layout of an example flexible substrate optical fiber splitter assembly 600 in accordance with certain implementations of the disclosed technology.
FIG. 6B depicts an example side-view of the example flexible substrate optical fiber splitter assembly 600 as shown in FIG. 6A illustrating the bottom portion 612 of the flexible substrate 104 (without adhesive) that allows the various fibers to separate from the flexible substrate 104.
FIG. 7A depicts a front-view of a flexible substrate 702 for a flexible splice tray assembly, including built-in securing tabs 704, in accordance with certain implementations of the disclosed technology.
FIG. 7B depicts a perspective-view of the flexible substrate 702 for a flexible splice tray assembly, including slots 706 (for securing the built-in securing tabs 704 as shown in FIG. 7A), and splice securing hoops 708, in accordance with certain implementations of the disclosed technology.
FIG. 7C depicts a front-view of a populated flexible substrate 702 for a flexible splice tray assembly, including excess slack fiber 710 secured to the substrate using the built-in securing tabs 704, a splice 712 secured with the splice securing hoops 708, and input/output optical fibers 714, 716 in accordance with certain implementations of the disclosed technology.
FIG. 7D depicts a perspective-view of a populated flexible substrate 702 for a flexible splice tray assembly, as shown in FIG. 7C, and having a roll directional indicator 718 in accordance with certain implementations of the disclosed technology.
FIG. 8A depicts a perspective-view of a rolled-up flexible substrate 702 for a flexible splice tray assembly, according to certain implementations of the disclosed technology.
FIG. 8B depicts an exploded view illustration of a flexible splice tray assembly 808 where the rolled-up flexible substrate 702 is inserted in a lower housing 802 and the input/output fibers (not shown) may be connectorized and attached to a multi-connector plug 804, and a protective outer housing 806 may enclose and protect the flexible substrate 702 and associated populated fibers, splice and/or splitter, according to certain implementations of the disclosed technology.
FIG. 8C depicts a perspective-view illustration of a flexible splice tray assembly 808, according to certain implementations of the disclosed technology. In certain implementations, the protective outer housing 806 may include a handle, loop, or hook 810 for securing the assembly 808 to an external structure or pull rope.
FIG. 9 is a flow-diagram of a method of assembly, in accordance with certain implementations of the disclosed technology.
FIG. 10 is a flow-diagram of a method of assembly, in accordance with certain implementations of the disclosed technology.
FIG. 11 is a flow-diagram of another method of assembly, in accordance with certain implementations of the disclosed technology.

### DETAILED DESCRIPTION

The disclosed technology provides a compact, flexible optical fiber splitter assembly and method of manufacture that can be utilized to address certain challenges and needs in optical fiber distribution systems. As will be explained below with reference to the figures, a flexible substrate such as mylar or the like may be utilized for securing a multi-optical fiber cable, bundle, or ribbon and one or more splitters in a way that allows all input and output fibers to be accessible from a single end of the assembly. In accordance with certain exemplary implementations of the disclosed technology, the optical fibers may be routed along certain paths (including U-turns) and secured to the flexible substrate in a way that enables control of associated bend radius' so that bend losses may be kept below a predetermined value.

In certain implementations, once the optical fibers are attached to the flexible substrate, the flexible substrate (with attached optical fibers) may be rolled into a cylinder and inserted in a housing for protection. In certain implementations, one or more of the fibers may be terminated with optical fiber connectors for easy and efficient connections to external optical fibers or equipment. According to certain implementations, a combination multi-connector and housing plug may be utilized to seal the flexible optical fiber splitter assembly within the cylindrical housing and provide connections to external optical fibers or equipment.

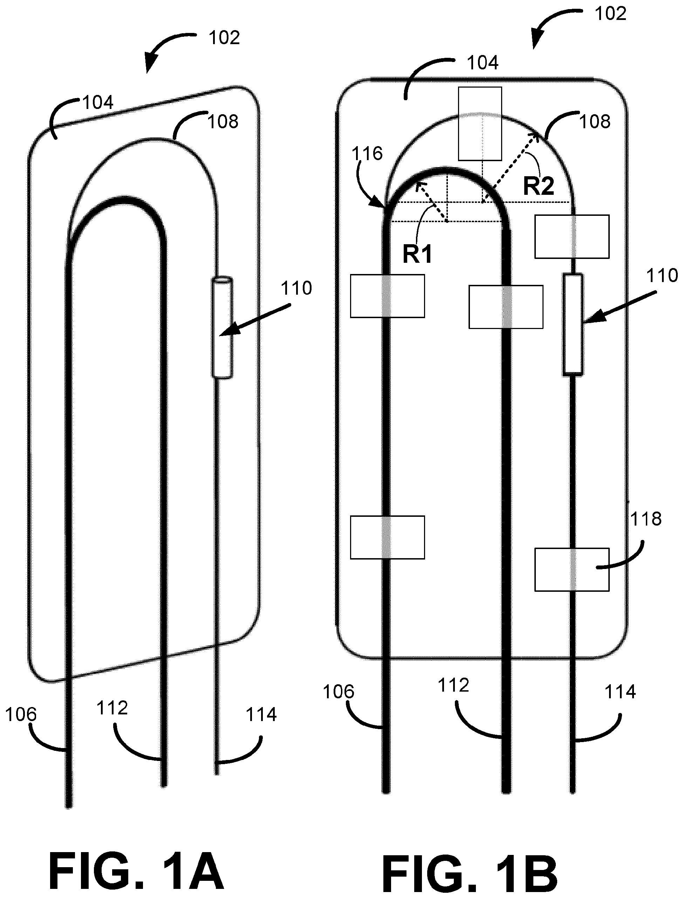

FIG. 1A depicts a perspective view of a flexible substrate optical fiber splitter assembly 102 having an input optical fiber bundle/ribbon 106 with one of the input optical fibers 108 separated from the input bundle/ribbon 106 and fed to a splitter 110. The split fibers 114 from the output of the splitter 110, along with the remaining bundle 112 may exit the bottom of the flexible substrate 104. In this example implementation, the remaining bundle 112 and the individual fiber 108 may be routed in a substantial U-shape, and may be attached to the flexible substrate 104 so that all fiber ends may enter/exit one end of the assembly 102, in accordance with certain implementations of the disclosed technology. In certain implementations, the various fibers and splitter may be attached to the flexible substrate 104 using adhesive. In certain implementations, the various fibers and splitter may be sandwiched between two flexible substrates. As will be discussed below with reference to FIG. 1B, the various fibers and splitter may be attached to the flexible substrate 104 using tape.

FIG. 1B depicts a front-view of the assembly 102 as shown in FIG. 1A illustrating a point 116 where one of the input optical fibers 108 may be separated from the bundle/ribbon 106. As illustrated, the remaining bundle 112 may be routed in a U-turn shape having a radius R1 and fed out the same side as the input optical fiber bundle/ribbon 106. The separated optical fiber 108 may be routed in a U-turn shape having a radius R2 and may be spliced to an input of the splitter 110. Utilizing this technique, the bend radius (and bending loss) of the optical fibers may be controlled by selective attachment to the flexible substrate, according to certain implementations of the disclosed technology. In accordance with certain exemplary implementations of the disclosed technology, the various optical fibers may be secured to the flexible substrate using tape 118, such a Mylar tape, etc. In certain implementations, the various optical fibers may be secured by being sandwiched between two sheets of flexible substrate material and secured with an adhesive. In certain implementations, the two sheets can be Mylar or similar material. In certain implementations, the thicknesses of the two sheets may be the same. In other implementations, the thicknesses of the two sheets may differ.

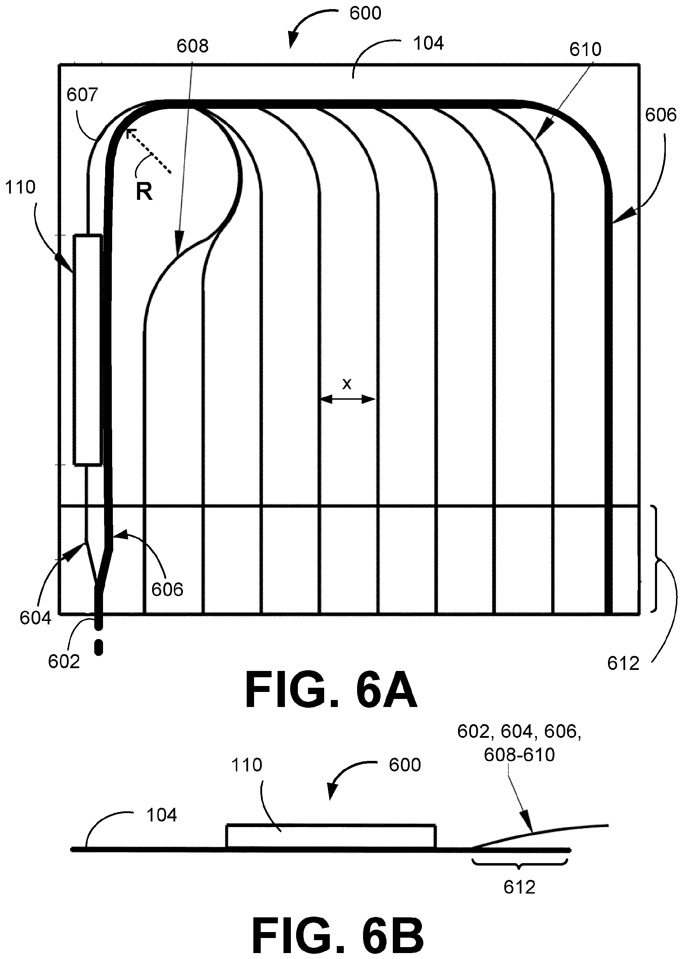

In certain implementations, particularly in cases where the input bundle/ribbon 106 comprises a ribbon of optical fibers, the fibers in the remaining bundle 112 may be separated, for example after the point 116, to allow for ease of bending/routing of the associated individual fibers so that they may be individually routed without kinking or other unintended deformation that may be experienced by attempting to put a U-turn in a ribbon of fibers that are attached to one another. In certain implementations, the various fibers may be separated and routed into a particular pattern as will be discussed below with reference to FIGs. 6A and 6B.

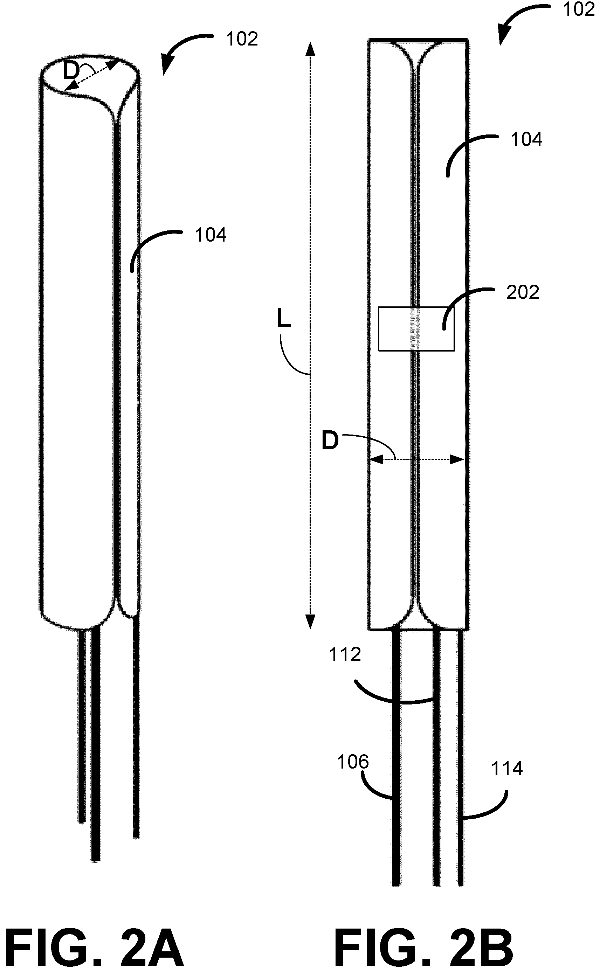

FIG. 2A depicts a perspective view of the flexible substrate optical fiber splitter assembly 102 that may be configured in a tube or cylindrical shape having a diameter D, according to certain implementations of the disclosed technology. According to certain implementations of the disclosed technology the diameter D may be configured in a range of about 10 mm to about 40 mm. In certain implementations, the diameter D may be configured in a range from about 15 mm to about 35 mm. In certain implementations, the diameter D may be configured in a range of about 20 mm to about 30 mm. In certain implementations, the diameter D may be configured as needed to provide a predetermined maximum bend loss for one or more of the optical fibers.

FIG. 2B depicts a front-view of the flexible substrate optical fiber splitter assembly 102 as depicted in FIG. 2A, that may be configured or rolled in a tube or cylindrical shape, such that the optical fibers 108, 112, 114, enter/exit one end of the assembly 102, according to certain implementations of the disclosed technology. In certain implementations, the cylindrical shape may be preserved by affixing one or more pieces of tape 202 to the adjoining edges of flexible substrate. In accordance with certain exemplary implementations of the disclosed technology, the length L of the assembly 102 (not counting the optical fibers) may be configured in a range of about 8 cm to about 15 cm.

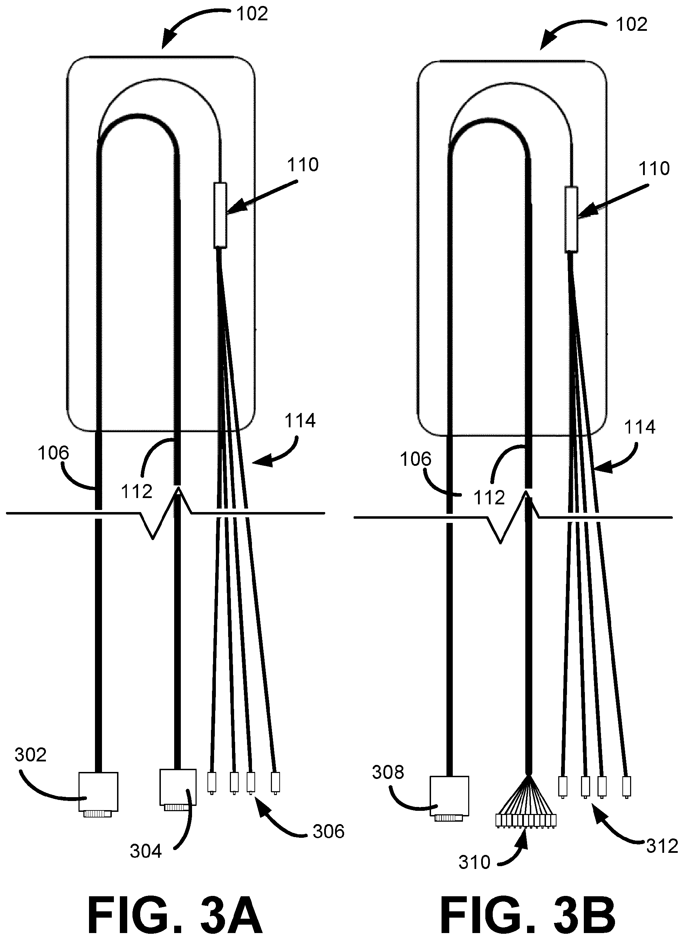

FIG. 3A depicts a front-view of the assembly 102, as shown in FIG. 1A, where the input optical fibers 106 (which may be in the form of a cable, bundle. or ribbon) and output optical fibers 112 114 are connectorized 302, 304, 306, according to certain implementations of the disclosed technology.

FIG. 3B depicts a front-view of the assembly 102, as shown in FIG. 1A, where the input 106 and output optical fibers 112 114 are connectorized 308, 310, 312, in a different configuration, according to certain implementations of the disclosed technology.

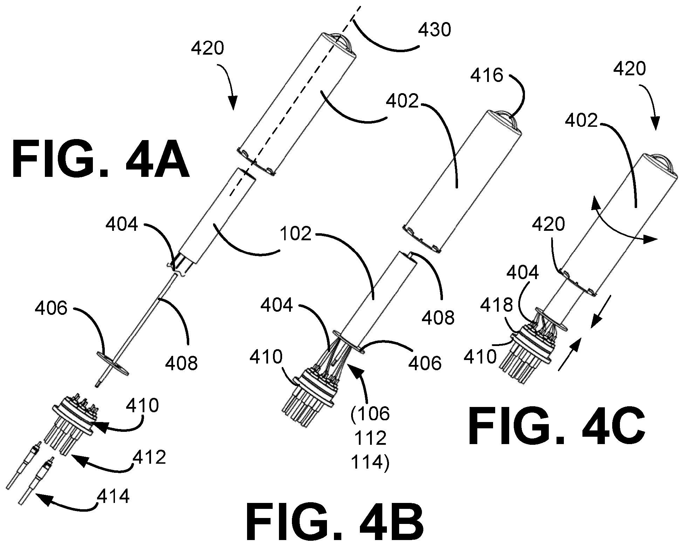

FIG. 4A is an exploded view illustration of an assembly package 420 in which a flexible substrate optical fiber splitter assembly 102 is configured for being enclosed in a housing 402, according to certain implementations of the disclosed technology. In this illustration, the input/output optical fibers 404 are shown truncated for clarity. In certain implementations, an alignment disc 408 having holes therethrough and/or peripheral fiber securing notches may be installed to help with management of the various optical fibers 404. In certain implementations, the alignment disc 408 may include an elongated central member 408 that may be disposed within the interior of the cylindrical assembly 102, for example, to keep the alignment disc 408 essentially perpendicular to the main axis 430 of the assembly 420. In certain implementations, the optical fibers 404 may be thread through corresponding holes of the disc 406 and/or secured in the peripheral fiber securing notches, for example, to help with fiber management during assembly.

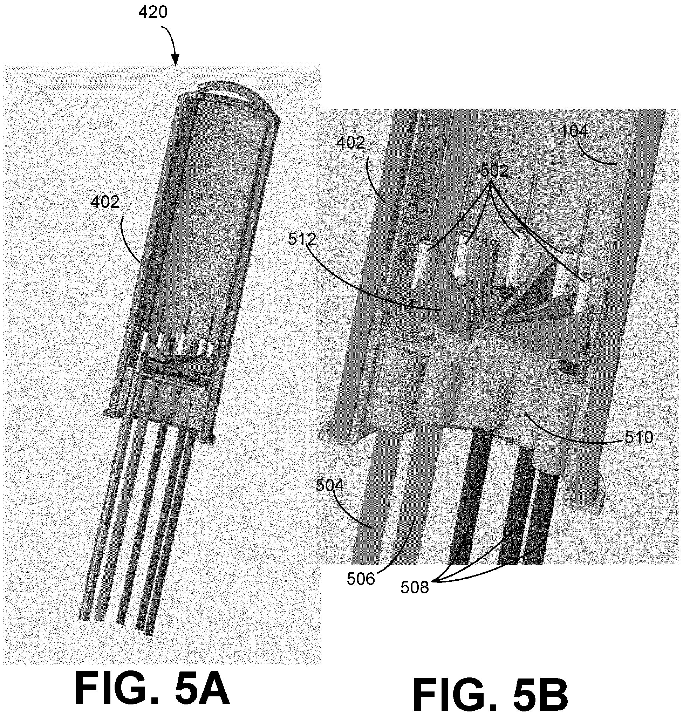

In accordance with certain exemplary implementations of the disclosed technology (and as will be further discussed with reference to FIGs. 5A, 5B, 6A, and 6B below) the ends of the optical fibers 404 may exit the flexible substrate and be inserted into central tubes of corresponding furcations. In certain implementations, the individual fiber and furcation tubing may be terminated to a connector 412 near the housing plug 410, for example, to provide externally accessible connectors 412 for connecting to external fibers 414.

FIG. 4B depicts another exploded view illustration of the assembly package 420 as shown in FIG. 4A, in which the optical fibers 404 (106, 112, 114) of the flexible substrate optical fiber splitter assembly 102 are connectorized and attached to the multi-connector plug 410, according to certain implementations of the disclosed technology. As depicted in this illustration, the alignment disc 406 and elongated central member 408 may be pushed up within the assembly 102. In certain implementations, the elongated central member 408 may extend below the alignment disc 406, for example, to provide a structural support to keep the fibers 404 from buckling.

FIG. 4C is another exploded view illustration of the assembly package 420 as shown in FIG. 4A and FIG. 4B, in which the optical fibers 404 of flexible substrate optical fiber splitter assembly 102 are connectorized and attached to the multi-connector plug 410, which may also be used to insert into the housing 402 to seal the flexible substrate optical fiber splitter assembly 102 withing the housing 402, according to certain implementations of the disclosed technology. Certain implementations of the multi-connector plug 410 may include an O-ring 418 to help seal the flexible substrate optical fiber splitter assembly 102 withing the housing 402. In certain implementations, the housing 402 may include attachment features 420, such as locking tabs threads, etc., to secure the multi-connector plug 410 to the housing 402.

In certain implementations, the housing 402 may include a handle 416 or hook, for example, to provide an attachment and/or pull point for the assembly 420.

In accordance with certain exemplary implementations of the disclosed technology, the overall diameter of the packaged assembly 420 may be configured in the range of about 25 mm to about 50 mm. In certain implementations, the overall length of the packaged assembly may be configured in the range of about 10 cm to about 30 cm.

FIG. 5A depicts a cut-away 3D representation of an example implementation of the assembly package 420 (as illustrated in FIGs. 4A-C), including the housing 402.

FIG. 5B depicts a close-up view of the cut-away 3D representation (as shown in FIG. 5A). For clarity, FIG. 5B illustrates the location of the flexible substrate 104, but FIG. 5A and FIG. 5B are illustrated without the various optical fibers or splitter (such as the input optical fiber bundle/ribbon 106, the remaining fibers 112 of the bundle, or the split fibers 114 from the output of the splitter 110 as illustrated in FIGs. 1A and 1B).

FIG. 5B illustrates an example implementation having an N fiber input furcation 504, an N-1 fiber output furcation 506, and split fiber output furcations 508, each of which may be utilized to route and protect the various input and output fibers. Furcation tubes, also known as jacketing, are typically used to protect and organize optical fibers, and to allow them to be terminated with connectors. The furcation tubes may include a central tube 502. In accordance with certain exemplary implementations of the disclosed technology, the furcation tubes 504, 506, 508 may be distributed around the open end of the housing 402 using a base 510, which may be configured to seat in the open end of the housing 402, and can include a plurality of distributed bores through which the furcation tubes 504, 506, 508 may be inserted and secured, for example, using an adhesive. In certain implementations, an indexing support disk 512 may be utilized to further separate and/or hold the furcation tubes 504, 506, 508 in place. In certain implementations, the indexing support disk 512 may be attached to the base 510 using adhesive.

In accordance with certain exemplary implementations of the disclosed technology, the central tubes 502 of corresponding furcations 504, 506, 508 may be utilized to route the various fibers of the assembly (such as the fibers of the input optical fiber bundle/ribbon 106, the remaining fibers 112 of the bundle, and/or the split fibers 114 from the output of the splitter 110 as illustrated in FIGs. 1A and 1B but not shown in FIGs. 5A and 5B for clarity) to connectors (not shown) for external connections. In this respect, the configuration/location of the various optical fibers on the flexible substrate 104 may be advantageously selected to line-up with the corresponding central tubes 502 for ease of assembly and reduction of bending losses, as will now be explained with reference to FIGs. 6A and 6B.

FIG. 6A depicts an example layout for a flexible substrate optical fiber splitter assembly 600 in which the splitter 110 may be disposed at the side of the substrate 104 where the input optical fiber bundle/ribbon cable 602 having N fibers enters the assembly 600. In this example implementation, one of the input optical fibers 604 may be separated from the bundle 602 and fed to the splitter 110, with the N-1 fibers of the remaining bundle 606 routed as illustrated, taking care to limit the minimum bend radius R of all fibers to result in a predetermined maximum bend loss.

As illustrated in FIG. 6A, the output of the splitter 110 can include M split fibers 607 that may be individually routed and attached to the flexible substrate 104 (for example using adhesive, and in some implementations, sandwiched between two flexible substrates) and distributed along the bottom edge of the substrate 104 so that they line up with the corresponding central tubes 502 of the furcations 504, 506, 508 as illustrated in FIGs. 5A and 5B. For example, a first fiber 608 of the M split fibers 607 may be routed in a near circular-shape and attached to the flexible substrate 104 in a first position, and so forth so that each of the M split fibers 607 are separated by a predetermined distance x that will result in alignment of the fibers with their corresponding central tubes 502 (as illustrated in FIG. 5B). In certain implementations, the Mth fiber 610 of the M split fibers 607 may be routed towards the edge of the flexible substrate 104 opposite of the splitter 110. In certain implementations, the N-1 fibers of the remaining bundle 606 may be routed close to the edge of the flexible substrate 104 opposite of the splitter 110. In certain implementations, the associated fibers may be secured to the flexible substrate 104 via an adhesive. In certain implementations, a bottom region 612 of the flexible substrate 104 may be free of adhesive so that the portion of the fibers in the region 612 don't stick to the flexible substrate 104 to allow for easily routing the fibers into the furcation tubes as discussed above with reference to FIG. 5B.

FIG. 6B depicts an example side-view of the example flexible substrate optical fiber splitter assembly 600 illustrating the bottom region 612 of the flexible substrate 104 (without adhesive) that allows the various fibers 602 604, 606, 608-610 to separate from the flexible substrate 104, for example, for ease of routing to the rest of the assembly as discussed with reference to FIG. 5B.

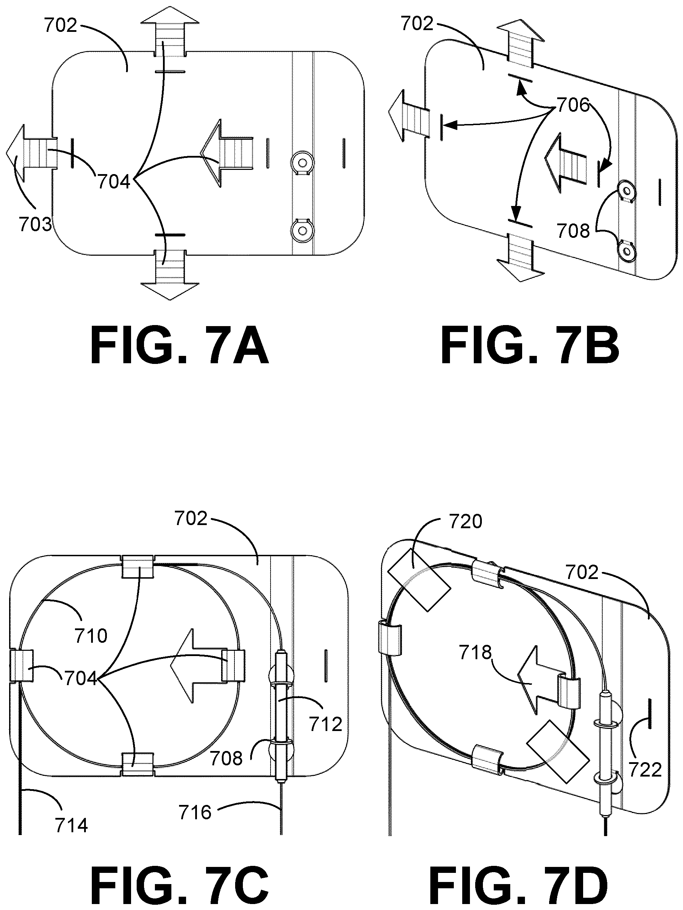

As discussed above, certain implementations of the disclosed technology provide a flexible substrate and associated packaging for a compact optical fiber splitter assembly. Certain similar implementations of the disclosed technology may be utilized to provide a flexible substrate splice tray, as will now be discussed with refence to FIGs. 7A-D, FIGs. 8A-C, and FIG. 11.

FIG. 7A depicts a front-view of a flexible substrate 702 for a flexible splice tray assembly, including built-in securing tabs 704 (including end tab 703), in accordance with certain implementations of the disclosed technology.

FIG. 7B depicts a perspective-view of the flexible substrate 702 for a flexible splice tray assembly, including slots 706 (for securing the built-in securing tabs 704 as shown in FIG. 7A), and splice securing hoops 708, in accordance with certain implementations of the disclosed technology.

FIG. 7C depicts a front-view illustration of a populated flexible substrate 702 for a flexible splice tray assembly, including excess slack fiber 710 looped and secured to the substrate 702 using the built-in securing tabs 704, a splice 712 secured to the flexible substrate 702 with the splice securing hoops 708, and input/output optical fibers 714, 716 in accordance with certain implementations of the disclosed technology.

FIG. 7D depicts a perspective-view of a populated flexible substrate 702 for a flexible splice tray assembly, as shown in FIG. 7C, and having a roll directional indicator 718 in accordance with certain implementations of the disclosed technology. In certain implementations, (optional) tape 720 may be utilized as needed to secure the optical fiber and/or splice to the flexible substrate 702. In certain implementations, a roll-up slot 722 may be utilized to couple with the end tab 703 (shown in FIG. 7A) to secure the populated flexible substrate 702 in a cylinder shape, as will be explained below.

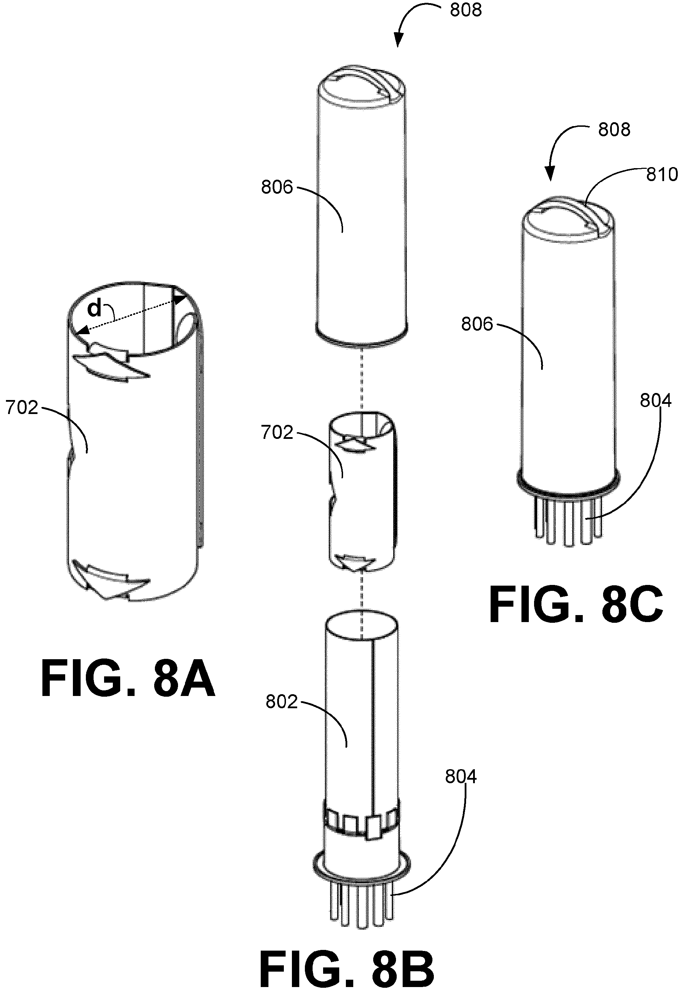

FIG. 8A depicts a perspective-view of a rolled-up flexible substrate 702 (such as depicted in FIGS. 7A-7D) for a flexible splice tray assembly having a cylinder diameter d, according to certain implementations of the disclosed technology. In certain implementations, once rolled-up, the cylindrical shape of the rolled-up flexible substrate 702 may be held in place using tape. In certain implementations, an end tab (such as the end tab 703 shown in FIG. 7A) may be coupled to a roll-up slot (such as the roll-up slot 722 shown in FIG. 7D) to hold the flexible substrate 702 in a cylinder shape to maintain the diameter d.

FIG. 8B depicts an exploded view illustration of a flexible splice tray assembly 808 where the (populated and) rolled-up flexible substrate 702 may be inserted in a lower housing 802 where the input/output fibers (not shown) may be connectorized and attached to a multi-connector plug 804 (similar to the connector discussed above with respect to FIGs. 4A-C and/or FIGs. 5A and 5B). In certain implementations, a protective outer housing 806 may enclose and protect the flexible substrate 702 and associated populated fiber and/or components, according to certain implementations of the disclosed technology. In accordance with certain exemplary implementations of the disclosed technology, multiple populated and rolled-up flexible substrates 702 of different diameters may be nested within the lower housing 802, with optical fibers connectorized and attached to the internal end of the multi-connector plug 804.

FIG. 8C depicts a perspective-view illustration of a flexible splice tray assembly 808, according to certain implementations of the disclosed technology. In certain implementations, the protective outer housing 806 may include a handle, loop, or hook 810 for securing the assembly 808 to an external structure, pull rope, etc.

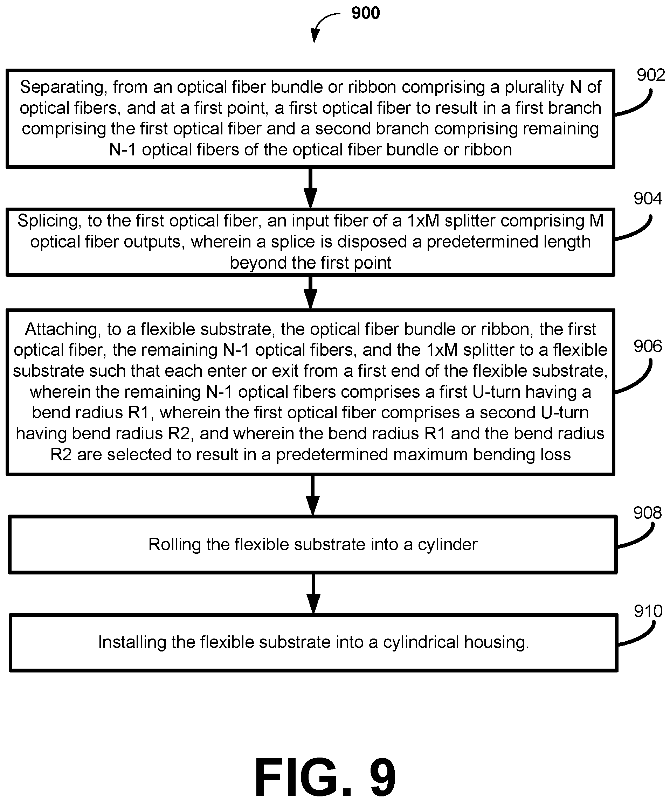

FIG. 9 is a flow-diagram of a method 900 of assembling a package having a flexible substrate optical fiber splitter assembly, in accordance with certain implementations of the disclosed technology. In block 902, the method 900 can include separating, from an optical fiber bundle or ribbon comprising a plurality N of optical fibers, and at a first point, a first optical fiber to result in a first branch comprising the first optical fiber and a second branch comprising remaining N-1 optical fibers of the optical fiber bundle or ribbon. In block 904, the method 900 includes splicing, to the first optical fiber, an input fiber of a 1xM splitter comprising M optical fiber outputs, wherein a splice is disposed a predetermined length beyond the first point. In block 906, the method 900 includes attaching, to a flexible substrate, the optical fiber bundle or ribbon, the first optical fiber, the remaining N-1 optical fibers, and the 1xM splitter to a flexible substrate such that each enter or exit from a first end of the flexible substrate, wherein the remaining N-1 optical fibers comprises a first U-turn having a bend radius R1, wherein the first optical fiber comprises a second U-turn having bend radius R2, and wherein the bend radius R1 and the bend radius R2 are selected to result in a predetermined maximum bending loss. In block 908, the method 900 can include rolling the flexible substrate into a cylinder. In block 910, the method can include installing the flexible substrate into a cylindrical housing.

In certain implementations, predetermined length beyond the first point is greater than 3.14xR2.

In certain implementations, a first length of the optical fiber bundle or ribbon comprising the plurality N of optical fibers may be attached to a first portion of the flexible substrate.

In certain implementations, a second length of the remaining N-1 optical fibers may be attached to a second portion of the flexible substrate.

In certain implementations, a third length of the first optical fiber may be attached to a third portion of the flexible substrate.

In certain implementations, a fourth length of the M optical fiber outputs of the 1xM splitter may be attached to a fourth portion of the flexible substrate.

In certain implementations, the 1xM splitter may be attached to a fifth portion of the flexible substrate and aligned with the fourth portion.

Certain implementations of the disclosed technology can include inserting, into the cylindrical housing, an alignment disc having a plurality of holes therethrough and/or peripheral fiber securing notches and a central elongated member perpendicular to a plane of the disc. One or more of the optical fiber cable/bundle/ribbon, the remaining N-1 optical fibers, and/or the M optical fiber outputs may be threaded through corresponding holes of the alignment disc or secured to the peripheral fiber securing notches.

Certain implementations of the disclosed technology can include installing optical fiber connectors to one or more of the optical fiber bundle or ribbon, the remaining N-1 optical fibers, and M optical fiber outputs of the 1xM splitter.

Certain implementations of the disclosed technology can include attaching the optical fiber connectors to a multi-connector terminal housing endcap/plug and using the multi-connector terminal endcap/plug to cap off and seal the flexible substrate cylinder within the cylindrical housing.

In accordance with certain exemplary implementations of the disclosed technology, the predetermined maximum bending loss is 0.05 dB. In accordance with certain exemplary implementations of the disclosed technology, the predetermined maximum bending loss is 0.10 dB. In accordance with certain exemplary implementations of the disclosed technology, the predetermined maximum bending loss is 0.15 dB. In accordance with certain exemplary implementations of the disclosed technology, the predetermined maximum bending loss is 0.20 dB. In accordance with certain exemplary implementations of the disclosed technology, the predetermined maximum bending loss is 0.25 dB. In accordance with certain exemplary implementations of the disclosed technology, the predetermined maximum bending loss is 0.30 dB.

In certain implementations, each of the optical fibers are single mode optical fibers. In other implementations, one or more of the optical fibers may be multimode optical fibers.

In accordance with certain exemplary implementations of the disclosed technology, the splitter may be a planar light circuit (PLC) splitter. In certain implementations, the splitter may be a 1x2 splitter. In certain implementations, the splitter may be a 1x4 splitter. In certain implementations, the splitter may be a 1x6 splitter. In certain implementations, the splitter may be a 1x8 splitter. In certain implementations, the splitter may be a 1xM splitter, where M may be selected as needed.

In accordance with certain implementations of the disclosed technology, the flexible substrate can include a mylar or similar material having a thickness in the range of 1 mil (24 microns) to 20 mils (480 microns). In certain implementations, the thickness of the flexible substrate may be as high as 40 mils (960 microns).

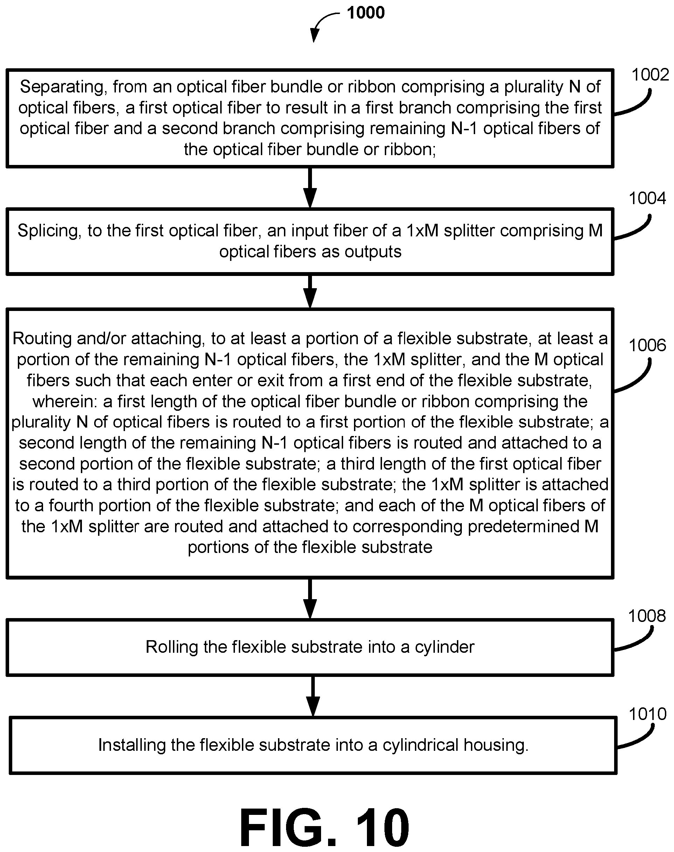

FIG. 10 is a flow-diagram of a method 1000 of assembling a package having a flexible substrate optical fiber splitter assembly, in accordance with certain implementations of the disclosed technology. In block 1002, the method 1000 can include separating, from an optical fiber bundle or ribbon comprising a plurality N of optical fibers, a first optical fiber to result in a first branch comprising the first optical fiber and a second branch comprising remaining N-1 optical fibers of the optical fiber bundle or ribbon. In block 1004, the method 1000 includes splicing, to the first optical fiber, an input fiber of a 1xM splitter comprising M optical fibers as outputs. In block 1006, the method 1000 includes routing and/or attaching, to at least a portion of a flexible substrate, at least a portion of the remaining N-1 optical fibers, the 1xM splitter, and the M optical fibers such that each enter or exit from a first end of the flexible substrate, wherein: a first length of the optical fiber bundle or ribbon comprising the plurality N of optical fibers is routed to a first portion of the flexible substrate; a second length of the remaining N-1 optical fibers is routed and attached to a second portion of the flexible substrate; a third length of the first optical fiber is routed to a third portion of the flexible substrate; the 1xM splitter is attached to a fourth portion of the flexible substrate; and each of the M optical fibers of the 1xM splitter are routed and attached to corresponding predetermined M portions of the flexible substrate. In block 1008, the method 1000 can include rolling the flexible substrate into a cylinder. In block 1010, the method can include installing the flexible substrate into a cylindrical housing.

Certain implementations can include aligning, with corresponding furcations of a housing, least a part of one or more of the first portion of the flexible substrate, the second portion of the flexible substrate, and the M portions of the flexible substrate.

In certain implementations, each of the N optical fibers, the first optical fiber, the N-1 optical fibers, and the M optical fibers may be routed to result in a predetermined maximum bending loss.

Certain implementations of the disclosed technology can include sandwiching least a portion of the splitter, the N optical fibers, the first optical fiber, the N-1 optical fibers, and the M optical fibers between two flexible substrates.

Certain implementations of the disclosed technology can include rolling the flexible substrate into a cylinder and disposing the flexible substrate into a cylindrical housing.

Certain implementations of the disclosed technology can include installing a base in the cylindrical housing, the base having a plurality of holes therethrough for inserting and securing corresponding furcations to the base to align with corresponding portions of the optical fiber bundle or ribbon, the remaining N-1 optical fibers, and the M optical fibers. Certain implementations of the disclosed technology include threading the optical fibers through central tubes of the furcations.

Certain implementations of the disclosed technology include installing optical fiber connectors to one or more of the optical fiber bundle or ribbon, the remaining N-1 optical fibers, and M optical fiber outputs of the 1xM splitter.

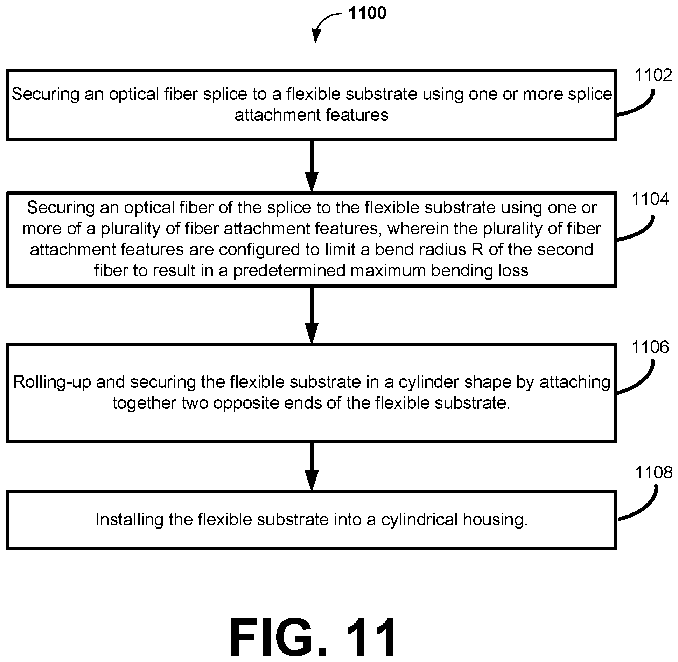

FIG. 11 is a flow-diagram of a method 1100 of assembling a package having a flexible splice tray assembly, in accordance with certain implementations of the disclosed technology. In block 1102, the method 1100 can include securing an optical fiber splice to a flexible substrate using one or more splice attachment features. In block 1104, the method 1100 includes securing an optical fiber of the splice to the flexible substrate using one or more of a plurality of fiber attachment features, wherein the plurality of fiber attachment features are configured to limit a bend radius R of the fiber to result in a predetermined maximum bending loss. In block 1106, the method 1100 includes rolling-up and securing the flexible substrate in a cylinder shape by attaching together two opposite ends of the flexible substrate. In block 1108, the method can include installing the flexible substrate into a cylindrical housing.

In certain implementations, the fiber attachment features can include a built-in securing tab and a corresponding built-in slot. In certain implementations, the second optical fiber and/or excess fiber may be secured to the flexible substrate by inserting the built-in securing tab into the corresponding built-in slot.

In accordance with certain exemplary implementations of the disclosed technology, the one or more splice attachment features can include one or more built-in splice securing hoops. In certain implementations, the optical fiber splice may be secured to the flexible substrate by inserting the optical fiber splice and one or more of the first optical fiber and the second optical fiber into the one or more built-in splice securing hoops so that the one or more built-in splice securing hoops snugly hold onto the splice.

Certain implementations of the disclosed technology include a cylindrical housing having an open end and a closed end. In certain implementations, the flexible substrate may be rolled-up and secured in a cylinder shape and disposed in the cylindrical housing.

Certain implementations of the disclosed technology include a cylindrical lower housing configured for coupling to a multi-connector terminal endcap. In certain implementations, the flexible substrate may be rolled-up, secured in a cylinder shape, and disposed in the cylindrical lower housing. In certain implementations, the multi-connector terminal endcap may be configured to cap off and seal the flexible substrate within the cylindrical housing.

In certain implementations, one or more of the first optical fiber and the second optical fiber may be connectorized. In certain implementations, the connectorized first and/or second optical fiber may be coupled to the multi-connector terminal endcap. In certain implementations, the cylindrical housing may be inserted over the lower housing and connected to the multi-connector terminal endcap.

In certain implementations, the optical fiber splice includes a first end and a second end, where a first optical fiber is coupled to the first end of the optical fiber splice, and where a second optical fiber is coupled to a second end of the optical fiber splice.

In accordance with certain exemplary implementations of the disclosed technology, the minimum bend radius R of the fiber may be controlled by the fiber attachment features to result in a predetermined maximum bending loss of 0.05 dB. In accordance with certain exemplary implementations of the disclosed technology, the predetermined maximum bending loss is 0.10 dB. In accordance with certain exemplary implementations of the disclosed technology, the predetermined maximum bending loss is 0.15 dB.

It is important to recognize that it is impractical to describe every conceivable combination of components or methodologies for purposes of describing the claimed subject matter. However, a person having ordinary skill in the art will recognize that many further combinations and permutations of the subject technology are possible. Accordingly, the claimed subject matter is intended to cover all such alterations, modifications, and variations that are within the spirit and scope of the claimed subject matter.

Throughout the specification and the claims, the following terms take at least the meanings explicitly associated herein, unless the context clearly dictates otherwise. The term "connect," "connecting," and "connected" mean that one function, feature, structure, or characteristic is directly joined to or in communication with another function, feature, structure, or characteristic. The terms "couple," "coupling," and "coupled" mean that one function, feature, structure, or characteristic is directly or indirectly joined to or in communication with another function, feature, structure, or characteristic. Relational terms such as "first" and "second," and the like may be used solely to distinguish one entity or action from another entity or action without necessarily requiring or implying any actual such relationship or order between such entities or actions. The term "or" is intended to mean an inclusive "or." Further, the terms "a," "an," and "the" are intended to mean one or more unless specified otherwise or clear from the context to be directed to a singular form. The term: "include" and its various forms are intended to mean including but not limited to. The terms "substantially," "essentially," "approximately," "about" or any other version thereof, are defined as being close to as understood by one of ordinary skill in the art, and in one non-limiting embodiment the term is defined to be within 10%, in another embodiment within 5%, in another embodiment within 1% and in another embodiment within 0.5%. A device or structure that is "configured" in a certain way is configured in at least that way but may also be configured in ways that are not listed.

Ranges have been expressed herein as from "about" or "approximately" one particular value and/or to "about" or "approximately" another particular value. When such a range is expressed, an embodiment includes values from the one particular value (starting point) and/or to the other particular value (ending point). In certain embodiments, the term "about" signifies a buffer of +/- 10% of the said range about each said starting point and/or ending point. In certain embodiments, the term "about" signifies a buffer of +/- 5% of the said range about each said starting point and/or ending point.

As disclosed herein, numerous specific details are set forth. However, it is to be understood that embodiments of the disclosed technology may be practiced without these specific details. References to "one embodiment," "an embodiment," "example embodiment," "various embodiments," and other like terms indicate that the embodiments of the disclosed technology so described may include a particular function, feature, structure, or characteristic, but not every embodiment necessarily includes the particular function, feature, structure, or characteristic. Further, repeated use of the phrase "in one embodiment" does not necessarily refer to the same embodiment, although it may.

Although this disclosure describes specific examples, embodiments, and the like, certain modifications and changes may be made without departing from the scope of the disclosed technology, as set forth in the claims below. Further, while at least one example, embodiment, or the like has been presented in the detailed description, many variations exist. Accordingly, the specification and figures are to be regarded in an illustrative rather than a restrictive sense, and all such modifications are intended to be included within the scope of the present disclosure. Any benefits, advantages, or solutions to problems that are described herein with regard to specific embodiments or examples are not intended to be construed as a critical, required, or essential feature or element of any or all of the claims.

The numbered clauses below describe aspects of the present disclosure.
1. A flexible substrate optical fiber splice tray assembly, comprising: a flexible substrate, comprising: a splice securing region having one or more splice attachment features for securing a splice to the flexible substrate; a slack fiber securing region having a plurality of fiber attachment features for securing excess fiber to the flexible substrate, wherein the plurality of fiber attachment features are configured to limit a bend radius R of the excess fiber to result in a predetermined maximum bending loss; wherein the flexible substrate is configured to be rolled-up and secured in a cylinder shape by attaching a first end of the flexible substrate to an opposing end of the flexible substrate.
2. The flexible substrate optical fiber splice tray assembly of clause 1, further comprising: an optical fiber splice secured to the one or more splice attachment features of the splice securing region, the optical fiber splice having a first end and a second end; a first optical fiber coupled to the first end of the optical fiber splice; and a second optical fiber coupled to a second end of the optical fiber splice and secured to at least one of the fiber attachment features of the slack fiber securing region.
3. The flexible substrate optical fiber splice tray assembly of clause 2, wherein the fiber attachment features comprise a built-in securing tab and a corresponding built-in slot, wherein the second optical fiber is secured to the flexible substrate by inserting the built-in securing tab into the corresponding built-in slot.
4. The flexible substrate optical fiber splice tray assembly of clause 2, wherein the one or more splice attachment features of the splice securing region comprise one or more built-in splice securing hoops, wherein the optical fiber splice is secured to the flexible substrate by inserting the optical fiber splice and one or more of the first optical fiber and the second optical fiber into the one or more built-in splice securing hoops.
5. The flexible substrate optical fiber splice tray assembly of clause 2, further comprising a cylindrical housing having an open end and a closed end, wherein the flexible substrate is rolled-up and secured in a cylinder shape and disposed in the cylindrical housing.
6. The flexible substrate optical fiber splice tray assembly of clause 5, further comprising a cylindrical lower housing configured for coupling to a multi-connector terminal endcap, wherein the flexible substrate is rolled-up, secured in a cylinder shape, and disposed in the cylindrical lower housing.
7. The flexible substrate optical fiber splice tray assembly of clause 6, wherein one or more of the first optical fiber and the second optical fiber is connectorized and coupled to the multi-connector terminal endcap, and the cylindrical housing is inserted over the lower housing and connected to the multi-connector terminal endcap.
8. The flexible substrate optical fiber splice tray assembly of clause 6, wherein the multi-connector terminal endcap is configured to cap off and seal the flexible substrate within the cylindrical housing.
9. The flexible substrate optical fiber splice tray assembly of clause 6, wherein the cylindrical housing comprises a polycarbonate.
10. The flexible substrate optical fiber splice tray assembly of clause 5, wherein the closed end of the cylindrical housing comprises an attachment handle or hook.
11. The flexible substrate optical fiber splice tray assembly of clause 1, wherein the predetermined maximum bending loss is 0.1 dB.
12. The flexible substrate optical fiber splice tray assembly of clause 1, wherein the excess fiber comprises one or more loops.
13. The flexible substrate optical fiber splice tray assembly of clause 1, wherein the flexible substrate comprises mylar having a thickness in a range of 1 mil (24 microns) to 20 mils (480 microns).
14. The flexible substrate optical fiber splice tray assembly of clause 2, wherein the first optical fiber and the second optical fiber each enter or exit from a first end of the flexible substrate.
15. A method of assembling a flexible substrate optical fiber splice tray, comprising: securing an optical fiber splice to a flexible substrate using one or more splice attachment features, wherein the optical fiber splice comprises a first end and a second end, wherein a first optical fiber is coupled to the first end of the optical fiber splice, and wherein a second optical fiber is coupled to a second end of the optical fiber splice; securing the second optical fiber to the flexible substrate using one or more of a plurality of fiber attachment features, wherein the plurality of fiber attachment features are configured to limit a bend radius R of the second optical fiber to result in a predetermined maximum bending loss; and rolling-up and securing the flexible substrate in a cylinder shape by attaching together two opposite ends of the flexible substrate.
16. The method of clause 15, wherein the fiber attachment features comprise a built-in securing tab and a corresponding built-in slot, wherein the second optical fiber is secured to the flexible substrate by inserting the built-in securing tab into the corresponding built-in slot.
17. The method of clause 15, wherein the one or more splice attachment features comprise one or more built-in splice securing hoops, wherein the optical fiber splice is secured to the flexible substrate by inserting the optical fiber splice and one or more of the first optical fiber and the second optical fiber into the one or more built-in splice securing hoops.
18. The method of clause 15, further comprising a cylindrical housing having an open end and a closed end, wherein the flexible substrate is rolled-up and secured in a cylinder shape and disposed in the cylindrical housing.
19. The method of clause 18, further comprising a cylindrical lower housing configured for coupling to a multi-connector terminal endcap, wherein the flexible substrate is rolled-up, secured in a cylinder shape, and disposed in the cylindrical lower housing, wherein the multi-connector terminal endcap is configured to cap off and seal the flexible substrate within the cylindrical housing.
20. The method of clause 19, wherein one or more of the first optical fiber and the second optical fiber is connectorized and coupled to the multi-connector terminal endcap, and the cylindrical housing is inserted over the lower housing and connected to the multi-connector terminal endcap.

## Claims

1. A flexible substrate optical fiber splice tray assembly, comprising:
a flexible substrate, comprising:
a splice securing region having one or more splice attachment features for securing a splice to the flexible substrate;
a slack fiber securing region having a plurality of fiber attachment features for securing excess fiber to the flexible substrate, wherein the plurality of fiber attachment features are configured to limit a bend radius R of the excess fiber to result in a predetermined maximum bending loss;
wherein the flexible substrate is configured to be rolled-up and secured in a cylinder shape by attaching a first end of the flexible substrate to an opposing end of the flexible substrate.

2. The flexible substrate optical fiber splice tray assembly of claim 1, further comprising:
an optical fiber splice secured to the one or more splice attachment features of the splice securing region, the optical fiber splice having a first end and a second end;
a first optical fiber coupled to the first end of the optical fiber splice; and
a second optical fiber coupled to a second end of the optical fiber splice and secured to at least one of the fiber attachment features of the slack fiber securing region.

3. The flexible substrate optical fiber splice tray assembly of claim 2, wherein the fiber attachment features comprise a built-in securing tab and a corresponding built-in slot, wherein the second optical fiber is secured to the flexible substrate by inserting the built-in securing tab into the corresponding built-in slot.

4. The flexible substrate optical fiber splice tray assembly of claim 2 or claim 3, wherein the one or more splice attachment features of the splice securing region comprise one or more built-in splice securing hoops, wherein the optical fiber splice is secured to the flexible substrate by inserting the optical fiber splice and one or more of the first optical fiber and the second optical fiber into the one or more built-in splice securing hoops.

5. The flexible substrate optical fiber splice tray assembly of any of claims 2 - 4, further comprising a cylindrical housing having an open end and a closed end, wherein the flexible substrate is rolled-up and secured in a cylinder shape and disposed in the cylindrical housing.

6. The flexible substrate optical fiber splice tray assembly of claim 5, further comprising a cylindrical lower housing configured for coupling to a multi-connector terminal endcap, wherein the flexible substrate is rolled-up, secured in a cylinder shape, and disposed in the cylindrical lower housing.

7. The flexible substrate optical fiber splice tray assembly of claim 6, wherein one or more of the first optical fiber and the second optical fiber is connectorized and coupled to the multi-connector terminal endcap, and the cylindrical housing is inserted over the lower housing and connected to the multi-connector terminal endcap.

8. The flexible substrate optical fiber splice tray assembly of claim 6 or claim 7, wherein the multi-connector terminal endcap is configured to cap off and seal the flexible substrate within the cylindrical housing.

9. The flexible substrate optical fiber splice tray assembly of any of claims 6 - 8, wherein the cylindrical housing comprises a polycarbonate.

10. The flexible substrate optical fiber splice tray assembly of any of claims 5 - 9, wherein the closed end of the cylindrical housing comprises an attachment handle or hook.

11. The flexible substrate optical fiber splice tray assembly of any of the preceding claims, wherein the predetermined maximum bending loss is 0.1 dB.

12. The flexible substrate optical fiber splice tray assembly of any of the preceding claims, wherein the excess fiber comprises one or more loops.

13. The flexible substrate optical fiber splice tray assembly of any of the preceding claims, wherein the flexible substrate comprises mylar having a thickness in a range of 1 mil (24 microns) to 20 mils (480 microns).

14. The flexible substrate optical fiber splice tray assembly of any of claims 2 - 13, wherein the first optical fiber and the second optical fiber each enter or exit from a first end of the flexible substrate.

15. A method of assembling a flexible substrate optical fiber splice tray, comprising:
securing an optical fiber splice to a flexible substrate using one or more splice attachment features, wherein the optical fiber splice comprises a first end and a second end, wherein a first optical fiber is coupled to the first end of the optical fiber splice, and wherein a second optical fiber is coupled to a second end of the optical fiber splice;
securing the second optical fiber to the flexible substrate using one or more of a plurality of fiber attachment features, wherein the plurality of fiber attachment features are configured to limit a bend radius R of the second optical fiber to result in a predetermined maximum bending loss; and
rolling-up and securing the flexible substrate in a cylinder shape by attaching together two opposite ends of the flexible substrate.
